# EUROPEAN PATENT APPLICATION

(11) **EP 2 495 293 A1**
(43) Date of publication of application: **05.09.2012**
(21) Application number: 10826622.2
(22) Date of filing: 22.10.2010
(51) Int. Cl.: C09J 7/02, C09J 7/00

(54) **PROCESS FOR PRODUCTION OF PRESSURE-SENSITIVE ADHESIVE SHEETS**

(30) Priority: 27.10.2009 JP 2009246682
(71) Applicant: Nitto Denko Corporation, Osaka 567-8680 (JP)
(72) Inventor: HIROSE, Isao, Ibaraki-shi Osaka 567-8680 (JP); FUJIWARA, Shuzo, Ibaraki-shi Osaka 567-8680 (JP); SHIMAZAKI, Yuuta, Ibaraki-shi Osaka 567-8680 (JP); HIROSE, Tetsuya, Ibaraki-shi Osaka 567-8680 (JP)
(74) Representative: Grünecker, Kinkeldey, Stockmair & Schwanhäusser
(86) International application number: PCT/JP2010/068659
(87) International publication number: WO 2011/052490

(57) **Abstract**

Provided is a process for producing a pressure-sensitive adhesive sheet by laminating layers of active-energy-ray-curable compositions and irradiating the laminate with an active energy ray. The processes gives a pressure-sensitive adhesive sheet with less defects at low production cost and is applicable to the production of pressure-sensitive adhesive sheets of various kinds. The process includes: Steps A1 and A2 of applying an active-energy-ray-curable composition to one surface of a first carrier and to one surface of a second carrier using a die coater to form coated layers thereon; Step B of placing the resulting first and second carriers so that the coating-layer-side surfaces of the carriers face each other, and introducing an active-energy-ray-curable composition into between the first and second carriers; and Step C of irradiating a multilayer assemblage with an active energy ray, the multilayer assemblage obtained in Step B and including the active-energy-ray-curable compositions between the first and second carriers.

## Description

### Technical Field

The present invention relates to a process for producing a pressure-sensitive adhesive sheet. Specifically, the present invention relates to a process for producing a multilayered pressure-sensitive adhesive sheet by laminating two or more layers of active-energy-ray-curable compositions to give a multilayer assemblage, and curing the multilayer assemblage through irradiation with an active energy ray.

### Background Art

There have been known processes for producing a pressure-sensitive adhesive sheet (self-adhesive sheet) by applying (coating) an active-energy-ray-curable composition (photocurable composition) onto a carrier such as a film, and polymerizing the applied active-energy-ray-curable resin composition through irradiation with an active energy ray to form a pressure-sensitive adhesive (self-adhesive) layer.

Of the processes, there are known processes for producing a pressure-sensitive adhesive sheet by applying two or more layers of active-energy-ray-curable compositions, and polymerizing the applied layers through irradiation with an active energy ray to give a pressure-sensitive adhesive sheet having a multilayer structure. These processes are typified by a process for producing a pressure-sensitive adhesive tape by sequentially applying two or more photopolymerizable compositions to form layers, and irradiating the applied layers with light while an interface being formed between adjacent layers to thereby photopolymerize monomers in the respective layers simultaneously (see Patent Literature (PTL) 1); and a process for producing a pressure-sensitive adhesive tape by simultaneously applying two or more photopolymerizable compositions to form layers, and irradiating the applied layers with light while an interface being formed between adjacent layers to thereby photopolymerize monomers in the respective layers simultaneously (see PTL 2).

However, the production process disclosed in PTL 1 causes bubbles to be readily included in the layer at the contact interface between the coating composition (photopolymerizable composition) and the external air during coating and thereby gives a pressure-sensitive adhesive tape which suffers from large quantities of point defects and linear defects due typically to the included bubbles. The production process disclosed in PTL 2 performs simultaneous coating (multilayer coating) using a single die coater and thereby requires a die being heavy and having a complicated structure, such as a co-extrusion die having a number of manifolds, resulting in higher production cost. In addition, the production process disclosed in PTL 2 is inapplicable to the production of pressure-sensitive adhesive tapes (pressure-sensitive adhesive tapes having a multilayered structure) of various kinds, because properties of coating compositions usable therein are limited.

### Citation List

### Patent Literature

PTL 1: Japanese Patent No. 1940931
PTL 2: Japanese Patent No. 2505255

### Summary of Invention

### Technical Problem

Accordingly, an object of the present invention is to provide a process for producing a pressure-sensitive adhesive sheet by laminating multiple layers of active-energy-ray-curable compositions and irradiating the layers with an active energy ray, in which the process gives a pressure-sensitive adhesive sheet less suffering from point defects and linear defects, enables low-cost production, and is applicable to the production of pressure-sensitive adhesive sheets of various kinds.

### Solution to Problem

After intensive investigations to achieve the object, the present inventors found that a production process including a specific step of applying an active-energy-ray-curable composition onto a carrier using a specific coater gives a pressure-sensitive adhesive sheet less suffering from point defects and linear defects, enables low-cost production, and is applicable to the production of pressure-sensitive adhesive sheets of various kinds. The present invention has been made based on these findings.

Specifically, the present invention provides, in an embodiment, a process for producing a pressure-sensitive adhesive sheet. The process includes at least the following steps:
Step A1 of applying an active-energy-ray-curable composition to one surface of a first carrier using a die coater to form a coated layer thereon;
Step A2 of applying an active-energy-ray-curable composition to one surface of a second carrier using a die coater to form a coated layer thereon;
subsequent to Steps A1 and A2, Step B of placing the first carrier and the second carrier so as to allow surfaces of the respective coated layers to face each other, and introducing an active-energy-ray-curable composition into between the first and second carriers; and
subsequent to Step B, Step C of irradiating a multilayer assemblage with an active energy ray, the multilayer assemblage being obtained in Step B and including the first carrier, the second carrier, and the active-energy-ray-curable compositions present between the first and second carriers.

In another embodiment, the present invention provides a process for producing a pressure-sensitive adhesive sheet. The process includes at least the following steps:
Step A1' of applying an active-energy-ray-curable composition to one surface of a first carrier using a die coater to form a coated layer thereon, and irradiating the coated layer with an active energy ray to cure the coated layer completely or partially;
Step A2' of applying an active-energy-ray-curable composition to one surface of a second carrier using a die coater to form a coated layer thereon, and irradiating the coated layer with an active energy ray to cure the coated layer completely or partially;
subsequent to Steps A1' and A2', Step B of placing the first carrier and the second carrier so as to allow surfaces of the respective coated layers to face each other, and introducing an active-energy-ray-curable composition into between the first and second carriers; and
subsequent to Step B, Step C of irradiating a multilayer assemblage with an active energy ray, the multilayer assemblage being obtained in Step B and including the first carrier, the second carrier, and the active-energy-ray-curable composition present between the first and second carriers.

The present invention further provides, in yet another embodiment, a process for producing a pressure-sensitive adhesive sheet. The process includes at least the following steps:
Step D of applying an active-energy-ray-curable composition to one surface of a first carrier using a die coater to form a coated layer thereon;
subsequent to Step D, Step E of placing the first carrier and a second carrier so as to allow the surface of the coated layer of the first carrier and one surface of the second carrier to face each other, and introducing an active-energy-ray-curable composition into between the first and second carriers; and
subsequent to Step E, Step F of irradiating a multilayer assemblage with an active energy ray, the multilayer assemblage being obtained in Step E and including the first carrier, the second carrier and the active-energy-ray-curable compositions present between the first and second carriers.

In addition and advantageously, the present invention provides a process for producing a pressure-sensitive adhesive sheet. The process includes at least the following steps:
Step D' of applying an active-energy-ray-curable composition to one surface of a first carrier using a die coater to form a coated layer thereon, and irradiating the coated layer with an active energy ray to cure the coated layer completely or partially;
subsequent to Step D', Step E of placing the first carrier and a second carrier so as to allow the surface of the coated layer of the first carrier and one surface of the second carrier to face each other, and introducing an active-energy-ray-curable composition into between the first and second carriers; and
subsequent to Step E, Step F of irradiating a multilayer assemblage with an active energy ray, the multilayer assemblage being obtained in Step E and including the first carrier, the second carrier, and the active-energy-ray-curable composition present between the first and second carriers.

### Advantageous Effects of Invention

The processes for producing pressure-sensitive adhesive sheets according to the present invention employ die coaters in the coating (application) of an active-energy-ray-curable composition (coating composition) for the formation of a laminated layer section of the pressure-sensitive adhesive sheet, thereby less cause problems such as contamination of bubbles and foreign substances into the coating composition, and deterioration and drying of the coating composition, and give pressure-sensitive adhesive sheets less suffering from point defects and linear defects derived from problems such as bubbles. In addition, the processes for producing pressure-sensitive adhesive sheets according to the present invention can employ a die having a lighter weight and a simpler (more convenient) structure, thereby excel in production cost, and are applicable to the production of pressure-sensitive adhesive sheets (multilayered pressure-sensitive adhesive sheets) of various kinds, because of including a coating system, which resists being affected by properties of a coating composition, as the coating system of the coating composition for the formation of a base layer section.

### Brief Description of Drawings

[Fig. 1] Fig. 1 is a schematic view illustrating an example of a first embodiment of the process for producing a pressure-sensitive adhesive sheet according to the present invention.
[Fig. 2] Fig. 2 is a schematic view illustrating another example (where the coating position is changed) of the first embodiment of the process for producing a pressure-sensitive adhesive sheet according to the present invention.
[Fig. 3] Fig. 3 is a schematic view illustrating still another example (where Steps A1' and A2' are employed) of the first embodiment of the process for producing a pressure-sensitive adhesive sheet according to the present invention.
[Fig. 4] Fig. 4 is a schematic view illustrating yet another example (where active-energy-ray-curable compositions 3b₁ and 3b₂ are simultaneously applied using a die coater 4c to form multiple layers) of the first embodiment of the process for producing a pressure-sensitive adhesive sheet according to the present invention.
[Fig. 5] Fig. 5 is a schematic view illustrating an example of a second embodiment of the process for producing a pressure-sensitive adhesive sheet according to the present invention.
[Fig. 6] Fig. 6 is a schematic view illustrating another example (where Step D' is employed) of the second embodiment of the process for producing a pressure-sensitive adhesive sheet according to the present invention. Description of Embodiments

The present invention provides a process for producing a pressure-sensitive adhesive sheet which includes a laminated assemblage of multiple polymer layers derived from active-energy-ray-curable compositions (polymer layers each formed by curing an active-energy-ray-curable composition by the action of an active energy ray). Such a pressure-sensitive adhesive sheet produced by the production process according to the present invention is simply referred to as a "pressure-sensitive adhesive sheet according to the present invention." As used herein the term "pressure-sensitive adhesive sheet" also includes one in the form of a tape, i.e., the term also includes a "pressure-sensitive adhesive tape."

The process for producing a pressure-sensitive adhesive sheet according to the present invention includes at least the step of applying an active-energy-ray-curable composition to one surface of at least one of a first carrier (first support) and a second carrier (second support) using a die coater to form a coated layer; subsequent to this step, the step of placing the first carrier and the second carrier so as to allow the surface of the first carrier and the surface of the second carrier to face each other and so as to allow the surface of the coated layer to be inside (while the two carriers being spaced) and introducing an active-energy-ray-curable composition into between the first and second carriers facing each other; and thereafter the step of irradiating a multilayer assemblage with an active energy ray, the multilayer assemblage being obtained in the aforementioned step and having the active-energy-ray-curable composition between the first and second carriers. When a coated layer is provided on the surface of only one of the first carrier and the second carrier, the process gives a pressure-sensitive adhesive sheet having two or more polymer layers; whereas, when coated layers are provided on the surfaces of both the first carrier and the second carrier, the process gives a pressure-sensitive adhesive sheet having three or more polymer layers.

The process for producing a pressure-sensitive adhesive sheet according to the present invention may further include one or more other steps than the aforementioned steps. Typically, the process may further include the step of irradiating the coated layer (coated layer formed on the surface of the first carrier and/or the second carrier) with an active energy ray to cure the coated layer completely or partially. This step is provided between the step of applying an active-energy-ray-curable composition to the carrier surface to form the coated layer and the step of placing the first carrier and the second carrier to face each other and introducing an active-energy-ray-curable composition into between the first and second carriers. The process, when including the step of curing the coated layer completely or partially as described above before the step of introducing an active-energy-ray-curable composition into between the first and second carriers, has the following advantages. Specifically, the step solidifies or semi-solidifies the coated layer provided on the carrier and thereby impedes mixing of the active-energy-ray-curable composition constituting the coated layer with the active-energy-ray-curable composition to be subsequently introduced between the first and second carriers. This prevents deterioration in functions of the laminated layer section(s) and base layer section due to mixing of the two active-energy-ray-curable compositions. The process, when not including the step of curing the coated layer completely or partially before the step of introducing an active-energy-ray-curable composition into between the first and second carriers, has advantages as follows. Specifically, the active-energy-ray-curable composition constituting the coated layer is partially mixed with the active-energy-ray-curable composition to be subsequently introduced into between the first and second carriers at the interface between the two compositions, and this increases adhesion between the laminated layer section(s) and the base layer section. As used herein the term "laminated layer section(s)" refers to a polymer layer or layers formed from a coated layer provided on the surface of a carrier in the pressure-sensitive adhesive sheet according to the present invention; and the term "base layer section" refers to a polymer layer formed from an active-energy-ray-curable composition introduced into between the first and second carriers in the pressure-sensitive adhesive sheet according to the present invention.

### [Active-Energy-Ray-Curable Composition]

The active-energy-ray-curable compositions for use in the present invention are compositions each of which is cured (polymerized) by the action of an active energy ray and forms a polymer layer. Exemplary active-energy-ray-curable compositions include, but are not limited to, acrylic, rubber, vinyl alkyl ether, silicone, polyester, polyamide, urethane, fluorine-containing, and epoxy active-energy-ray-curable compositions. Among them, acrylic and urethane active-energy-ray-curable compositions are preferred, of which acrylic active-energy-ray-curable compositions are particularly preferred from the viewpoint of variety in polymer design.

At least one of polymer layers (particularly a polymer layer constituting at least one surface of the pressure-sensitive adhesive sheet) in the pressure-sensitive adhesive sheet according to the present invention is a pressure-sensitive adhesive layer. Accordingly, at least one of active-energy-ray-curable compositions for use in the present invention is a composition for the formation of a pressure-sensitive adhesive layer (hereinafter also referred to as a "pressure-sensitive adhesive composition"), namely, an active-energy-ray-curable pressure-sensitive adhesive composition. Of such compositions, an acrylic pressure-sensitive adhesive composition (active-energy-ray-curable acrylic pressure-sensitive adhesive composition) is preferred.

Examples of the active-energy-ray-curable compositions (including active-energy-ray-curable pressure-sensitive adhesive compositions) include compositions each containing a monomer mixture or a partially polymerized product thereof as an essential component and further containing additives such as an active-energy-ray-induced polymerization initiator (photoinitiator) and a crosslinking agent according to necessity. The monomer mixture is a mixture of monomer components for the formation of a base polymer constituting the polymer layer.

Preferred examples of acrylic active-energy-ray-curable compositions (including active-energy-ray-curable acrylic pressure-sensitive adhesive compositions) include compositions each containing a monomer mixture or a partially polymerized product thereof as an essential component, which monomer mixture is a mixture of monomers for the formation of an acrylic polymer serving as a base polymer. These compositions preferably further contain an active-energy-ray-induced polymerization initiator. Where necessary, they may further contain additives such as a crosslinking agent. As used herein the term "monomer mixture" refers to a mixture consisting of one or more monomer components for the formation of a base polymer (e.g., acrylic polymer) alone. Also as used herein the term "partially polymerized product" refers to a composition in which one or more of constitutive components of the monomer mixture have been partially polymerized.

In the acrylic active-energy-ray-curable compositions (including active-energy-ray-curable acrylic pressure-sensitive adhesive compositions), preferred examples of monomer components for the formation of the acrylic polymer serving as a base polymer include, but are not limited to, (meth)acrylic alkyl esters each having a linear or branched-chain alkyl group (hereinafter also simply referred to as "(meth)acrylic alkyl esters"). Examples of the (meth)acrylic alkyl esters include (meth)acrylic C₁₋₂₀ alkyl esters [(meth)acrylic alkyl esters whose alkyl group having 1 to 20 carbon atoms] such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. Among them, (meth)acrylic C₂₋₁₄ alkyl esters are preferred, of which (meth)acrylic C₂₋₁₀ alkyl esters are more preferred. As used herein the term "(meth)acrylic" refers to "acrylic" and/or "methacrylic", and the same is true for other descriptions.

The (meth)acrylic alkyl esters may be used alone or in combination. The content of (meth)acrylic alkyl ester(s) in the monomer mixture based on the total amount of monomer components for the formation of the acrylic polymer (100 percent by weight) is typically preferably 60 percent by weight or more (e.g., from 60 to 99 percent by weight), and more preferably 80 percent by weight or more.

Monomer components for the formation of the acrylic polymer may further include, in addition to the (meth)acrylic alkyl ester(s), copolymerizable monomers such as polar-group-containing monomers and multifunctional monomers. Such copolymerizable monomers are used for improvements in cohesive strength of the polymer layer or for improvements in bond strength to an adhered when used as a pressure-sensitive adhesive layer. Each of different copolymerizable monomers may be used alone or in combination.

Exemplary polar-group-containing monomers include carboxyl-containing monomers such as (meth)acrylic acid, itaconic acid, maleic acid, fumaric acid, crotonic acid, and isocrotonic acid, and anhydrides of them, such as maleic anhydride; hydroxyl-containing monomers including hydroxylalkyl (meth)acrylates such as hydroxyethyl (meth)acrylate, hydroxypropyl (meth)acrylate, and hydroxybutyl (meth)acrylate, as well as vinyl alcohol and allyl alcohol; amido-containing monomers such as (meth)acrylamide, N,N-dimethyl(meth)acrylamide, N-methylol(meth)acrylamide, N-methoxymethyl(meth)acrylamide, and N-butoxymethyl(meth)acrylamide; amino-containing monomers such as aminoethyl (meth)acrylate, dimethylaminoethyl (meth)acrylate, and t-butylaminoethyl (meth)acrylate; glycidyl-containing monomers such as glycidyl (meth)acrylate and methylglycidyl (meth)acrylate; cyano-containing monomers such as acrylonitrile and methacrylonitrile; heterocycle-containing vinyl monomers such as N-vinyl-2-pyrrolidone, (meth)acryloylmorpholine, N-vinylpyridine, N-vinylpiperidone, N-vinylpyrimidine, N-vinylpiperazine, N-vinylpyrrole, N-vinylimidazole, and N-vinyloxazole; alkoxyalkyl (meth)acrylate monomers such as niethoxyethyl (meth)acrylate and ethoxyethyl (meth)acrylate; sulfo-containing monomers such as sodium vinylsulfonate; phosphate-containing monomers such as 2-hydroxyethylacryloyl phosphate; imido-containing monomers such as cyclohexylmaleimide and isopropylmaleimide; and isocyanate-containing monomers such as 2-methacryloyloxyethyl isocyanate. Of the polar-group-containing monomers, carboxyl-containing monomers and anhydrides of them are preferred, of which acrylic acid is particularly preferred.

The content of polar-group-containing monomer(s) in the monomer mixture based on the total amount of monomer components for the formation of the acrylic polymer (100 percent by weight) is preferably 30 percent by weight or less (e.g., from 1 to 30 percent by weight), and more preferably 3 to 20 percent by weight. Polar-group-containing monomer(s), if present in a content of more than 30 percent by weight, may cause, for example, the polymer layer to have an excessively high cohesive strength and, when used as a pressure-sensitive adhesive layer, to have insufficient tackiness. Polar-group-containing monomer(s), if in an excessively low content (e.g., less than 1 percent by weight), may not sufficiently give effects of its copolymerization.

Exemplary multifunctional monomers include hexanediol di(meth)acrylate, butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylates, polyester acrylates, and urethane acrylates.

The content of multifunctional monomer(s) in the monomer mixture based on the total amount of monomer components for the formation of the acrylic polymer (100 percent by weight) is preferably 2 percent by weight or less (e.g., from 0 to 2 percent by weight), and more preferably from 0 to 1 percent by weight. Multifunctional monomers, if present in a content of more than 2 percent by weight, may cause the polymer layer to have an excessively high cohesive strength and, when used as a pressure-sensitive adhesive layer, to have insufficient tackiness.

Exemplary other copolymerizable monomers than the polar-group-containing monomers and multifunctional monomers include (meth)acrylic esters other than the (meth)acrylic alkyl esters, including (meth)acrylic esters each having an alicyclic hydrocarbon group, such as cyclopentyl (meth)acrylate, cyclohexyl (meth)acrylate, and isobornyl (meth)acrylate, and (meth)acrylic esters each having an aromatic hydrocarbon group, such as phenyl (meth)acrylate; vinyl esters such as vinyl acetate and vinyl propionate; aromatic vinyl compounds such as styrene and vinyltoluene; olefins or dienes such as ethylene, butadiene, isoprene, and isobutylene; vinyl ethers such as vinyl alkyl ethers; and vinyl chloride.

The active-energy-ray-curable compositions for use in the present invention preferably each contain an active-energy-ray-induced polymerization initiator (photoinitiator). Though not limited, examples of the photoinitiator include benzoin ether photoinitiators, acetophenone photoinitiators, α-ketol photoinitiators, aromatic sulfonyl chloride photoinitiators, photoactive oxime photoinitiators, benzoin photoinitiators, benzil photoinitiators, benzophenone photoinitiators, ketal photoinitiators, and thioxanthone photoinitiators, which are represented by polymerization initiators as described in Japanese Unexamined Patent Application Publication (JP-A) No. 2008-12798, Japanese Unexamined Patent Application Publication (JP-A) No. 2006-022189, and Japanese Unexamined Patent Application Publication (JP-A) No. 2005-179561. Though not critical, the content of photoinitiator(s) in the active-energy-ray-curable composition is preferably from 0.01 to 5 parts by weight, and more preferably from 0.05 to 3 parts by weight, per 100 parts by weight of the total amount of monomer components (total monomer components) for the formation of the base polymer (e.g., acrylic polymer).

Exemplary active energy rays to be applied for the activation of photoinitiators include ionizing radiation such as alpha rays, beta rays, gamma rays, neutron beams, and electron beams; and ultraviolet rays, of which ultraviolet rays are preferred. Conditions for the irradiation with the active energy ray, such as irradiation energy, irradiation time, and irradiation procedure, are not limited, as long as capable of activating the photoinitiator to induce a reaction of monomer components.

The active-energy-ray-curable compositions for use in the present invention may each contain suitable additives in accordance typically with the intended use and functions of the polymer layers to be formed. The additives may be chosen according to the type of the polymer, and examples thereof include crosslinking agents (e.g., polyisocyanate crosslinking agents, silicone crosslinking agents, epoxy crosslinking agents, and alkyl-etherified melamine crosslinking agents), tackifiers (e.g., those which are composed of rosin derivative resins, polyterpene resins, petroleum resins, or oil-soluble phenol resins and are solid, semi-solid, or liquid at room temperature), plasticizers, fillers, age inhibitors, antioxidants, and colorants (dyestuffs and pigments such as carbon black).

The active-energy-ray-curable compositions for use in the present invention may each contain, bubbles and/or hollow microspheres. In particular, the active-energy-ray-curable composition to be introduced into between the first and second carriers preferably contains bubbles and/or hollow microspheres. This gives a polymer layer containing bubbles and/or hollow microspheres. The pressure-sensitive adhesive sheet according to the present invention, when having such a polymer layer containing bubbles and/or hollow microspheres, has more satisfactory conformability (fittability) to protrusions and depressions (asperities), thus being preferred. An active-energy-ray-curable composition containing bubbles and/or hollow microspheres is also generically referred to as a "bubble-containing active-energy-ray-curable composition"; and a polymer layer (or pressure-sensitive adhesive layer) containing bubbles and/or hollow microspheres is also generically referred to as a "bubble-containing polymer layer (or pressure-sensitive adhesive layer)."

The bubbles are preferably closed-cell bubbles, but may be a mixture of closed-cell bubbles and open-cell bubbles. Such bubbles generally have spherical shapes but may have irregular spherical shapes. Though not critical, the bubbles have an average cell size (diameter) of typically from 1 to 1000 µm, preferably from 10 to 500 µm, and more preferably from 30 to 300 µm.

A gaseous component contained in the bubbles (gas component constituting the bubbles; also referred to as a "bubble-constituting gas") is not limited and is exemplified by various gaseous components including inert gases such as nitrogen, carbon dioxide, and argon; and air. When a reaction such as polymerization reaction is performed after incorporation of a bubble-constituting gas, the bubble-constituting gas should be one that does not adversely affect the reaction. The bubble-constituting gas is preferably nitrogen, because nitrogen does not adversely affect such reactions and is available at low cost.

The amount of bubbles in a bubble-containing active-energy-ray-curable composition is not critical and may be suitably chosen from the viewpoints typically of adhesive properties of the pressure-sensitive adhesive sheet. From the viewpoint of adhesiveness of the pressure-sensitive adhesive sheet, the amount is, in terms of its lower limit, preferably 10 percent by volume or more, more preferably 11 percent by volume or more, and furthermore preferably 12 percent by volume or more; and, from the viewpoint of cohesive strength of the polymer layer, the amount is, in terms of its upper limit, preferably 50 percent by volume or less, more preferably 40 percent by volume or less, and furthermore preferably 30 percent by volume or less, each based on the total volume of the bubble-containing active-energy-ray-curable composition.

The hollow microspheres may be any of hollow inorganic microspheres and hollow organic microspheres. Specifically, exemplary hollow inorganic microspheres include hollow balloons made of glass, such as hollow glass balloons; hollow balloons made of metallic compounds, such as hollow alumina balloons; and hollow balloons made of ceramics, such as hollow ceramic balloons. Exemplary hollow organic microspheres include hollow balloons made of resins, such as hollow acrylic balloons and hollow poly(vinylidene chloride) balloons. Among them, hollow glass balloons are preferred.

Though not critical, the particle size (average particle diameter) of hollow microspheres may be selected within the range of typically from 1 to 500 µm, preferably from 5 to 200 µm, and furthermore preferably from 10 to 100 µm.

Though not critical, the specific gravity of hollow microspheres may be selected within the range of typically from 0.1 to 0.8 g/cm³, and preferably from 0.12 to 0.5 g/cm³. Hollow microspheres having a specific gravity of less than 0.1 g/cm³ may be hardly uniformly dispersed when they are blended with the bubble-containing active-energy-ray-curable composition, because they may significantly float over other components. In contrast, hollow microspheres having a specific gravity of more than 0.8 g/cm³ may be expensive, thus causing high cost.

Though not critical, the content of the hollow microspheres in the bubble-containing active-energy-ray-curable composition, may be selected within the range of from 5 to 50 percent by volume, preferably from 10 to 50 percent by volume, and furthermore preferably from 15 to 40 percent by volume, based on the total volume of the bubble-containing active-energy-ray-curable composition. Hollow microspheres, if contained in a content of less than 5 percent by volume, may not sufficiently exhibit effects of their addition; and, if contained in a content of more than 50 percent by volume, may decrease the bond strength of the pressure-sensitive adhesive sheet.

The bubble-containing active-energy-ray-curable composition preferably further contains a surfactant so that the adhesion and frictional resistance between the hollow microparticles and the base polymer (for example, the acrylic polymer) are reduced and that the bubbles are stably and satisfactorily mixed in the composition. The surfactant may be any of fluorochemical surfactants, silicone surfactants, nonionic surfactants, and ionic surfactants. Among them, fluorochemical surfactants are preferred, because they allow bubbles to be mixed satisfactorily and prevent the bubbles from coalescing. Of the fluorochemical surfactants, preferred are fluorochemical surfactants each having an oxy (C₂-C₃)alkylene group and a fluorinated hydrocarbon group in the molecule; of which nonionic surfactants are more preferred from the viewpoint of dispersibility in the base polymer. The bubble-containing active-energy-ray-curable composition may contain one fluorochemical surfactant alone, or two or more different fluorochemical surfactants in combination. Fluorochemical surfactants described in Japanese Unexamined Patent Application Publication (JP-A) No. 2008-12798 and Japanese Unexamined Patent Application Publication (JP-A) No. 2006-022189 may be preferably used as the fluorochemical surfactants herein.

The fluorochemical surfactants may also be commercial products, such as products supplied under the trade names of "FTERGENT 251" and "FTX-218" by NEOS Co., Ltd.; products supplied under the trade names of "Megafac F-477" and "Megafac F-470" by DIC Corporation; products supplied under the trade names of "Surflon S-381", "Surflon S-383", "Surflon S-393", "Surflon KH-20", and "Surflon KH-40" by AGC Seimi Chemical Co., Ltd.; products supplied under the trade names of "EFTOP EF-352" and "EFTOP EF-801" by JEMCO Inc. (now Mitsubishi Materials Electronic Chemicals Co., Ltd.); and products supplied under the trade name of "Unidyne TG-656" by Daikin Industries Ltd.

The active-energy-ray-curable compositions may each be prepared by mixing components such as monomer components for the formation of the base polymer, photoinitiator, and additives with one another according to a known technique. Part of monomer components may be polymerized according to necessity typically for viscosity regulation. Specifically, the bubble-containing active-energy-ray-curable composition may be prepared, for example, by: (i) mixing monomer components for the formation of the base polymer with a photoinitiator to give a mixture (mixture of a monomer mixture with a photoinitiator); (ii) subjecting the mixture to a polymerization reaction with an active energy ray (e.g., polymerization with an ultraviolet ray) according to necessity to give a composition (syrup) in which only part of the monomer components is polymerized; and (iii) incorporating, where necessary, hollow microparticles, surfactants, and other additives into the resulting syrup to give a blend. The bubble-containing active-energy-ray-curable composition, for further containing bubbles, is prepared further by (iv) introducing bubbles into the blend obtained from the step (iii). A process for the preparation of the bubble-containing active-energy-ray-curable composition is, however, not limited to the above one. As used herein the term "syrup" refers to a "composition in the form of a syrup."

Bubbles are preferably incorporated into the composition as a last component as in the above preparation process, so as to allow bubbles to be incorporated into and remain in the composition stably. A blend before being mixed with bubbles (e.g., the blend obtained from the step (iii)) preferably has a high viscosity so as to hold bubbles stably therein. Though not critical, the viscosity of the blend before being mixed with bubbles is typically preferably from 5 to 50 Pa•s, and more preferably from 10 to 40 Pa•s, as measured with a BH viscometer using a No. 5 rotor, at a number of revolutions of 10 rpm and a measurement temperature of 30°C. A blend having a viscosity of less than 5 Pa•s may not satisfactorily hold bubbles due to its excessively low viscosity, and incorporated bubbles may immediately undergo coalescence to escape out of the system. In contrast, a blend having a viscosity of more than 50 Pa•s may be unsuitable for the formation of a polymer layer by coating, due to its excessively high viscosity. The viscosity of the blend may be controlled typically by incorporating a polymer component such as an acrylic rubber or a thickening additive; or by partially polymerizing monomer components for the formation of the base polymer.

Incorporation of bubbles into the blend may be performed by any known technique for mixing bubbles. An exemplary device for use herein is one that includes a stator and a rotor, in which the stator includes a disc having a through hole at the center part and a multiplicity of fine teeth arranged on the disc; and the rotor faces the stator and includes a disc and a multiplicity of fine teeth arranged on the disc so that the teeth of the rotor face the teeth of the stator. Using this device, the blend is introduced into between the teeth of the stator and the teeth of the rotor, and a gaseous component for constituting bubbles (bubble-constituting gas) is introduced via the through hole into the blend while rotating the rotor at high speed to allow the bubble-constituting gas to be finely divided and dispersed into the blend, to give a composition bearing finely divided, dispersed bubbles.

To suppress or prevent coalescence of bubbles, it is desirable to carry out the steps from the mixing of bubbles to the formation of the bubble-containing polymer layer continuously as a series of steps. Specifically, it is desirable that a bubble-containing active-energy-ray-curable composition is prepared by incorporating bubbles in the above manner, and the bubble-containing active-energy-ray-curable composition is immediately used for the formation of the bubble-containing polymer layer.

### [Carriers]

The carriers (first carrier and second carrier) for use in the present invention play a role as carriers for layer(s) (e.g., coated layer(s)) derived from active-energy-ray-curable composition(s), and for a polymer layer after irradiation with an active energy ray. In addition, the carriers are effective so as to cover the surface of the layer derived from the active-energy-ray-curable composition, to thereby protect the surface from being in contact typically with oxygen in the atmosphere and to protect the photopolymerization reaction from inhibition due typically to oxygen in the atmosphere upon the polymerization reaction (photopolymerization reaction) with an active energy ray.

When they will be removed after the production of the pressure-sensitive adhesive sheet (e.g., upon use of the pressure-sensitive adhesive sheet), the carriers are preferably separators (release liners). The separators may for example be customary release papers. Specifically, exemplary separators usable herein include separators composed of a base (a base for separator) and a release coating layer treated with a release coating agent (parting agent) and present on at least one side of the base; separators composed of a base having low adhesiveness and made from any of fluorocarbon polymers (e.g., polytetrafluoroethylenes, polychlorotrifluoroethylenes, poly(vinyl fluoride)s, poly(vinylidene fluoride)s, tetrafluoroethylene-hexafluoropropylene copolymers, and chlorofluoroethylene-vinylidene fluoride copolymers); and separators composed of a base having low adhesiveness and made from any of nonpolar polymers (e.g., olefinic resins such as polyethylenes and polypropylenes).

In the separator including a base for separator (release liner base) and a release coating layer present on at least one side of the base, exemplary release liner bases include plastic base films (synthetic resin films) such as polyester films (e.g., poly(ethylene terephthalate) films), olefinic resin films (e.g., polyethylene films and polypropylene films), poly(vinyl chloride) films, polyimide films, polyamide films (nylon films), and rayon films; papers (e.g., woodfree paper, Japanese paper, kraft paper, glassine paper, synthetic paper, and topcoat paper); and laminates (multilayer assemblies each having two or three layers) of these materials prepared typically through lamination or coextrusion. Among them, polyester films are preferred, of which poly(ethylene terephthalate) (PET) films are more preferred. Exemplary release coating agents for constituting the release coating layer include, but are not limited to, silicone release coating agents, fluorine-containing release coating agents, and long-chain alkyl release agents. Each of different release coating agents may be used alone or in combination.

The carriers preferably block oxygen and have optical transparency. The carriers each have a thickness of preferably from 10 to 200 µm, and more preferably from 20 to 100 µm from the viewpoint of strength. The carriers may each have a single-layer structure or multilayer structure.

### [Die Coater]

The process for producing a pressure-sensitive adhesive sheet according to the present invention employs a die coater as a coater for applying an active-energy-ray-curable composition to one surface of a carrier to form a coated layer. Specifically, the laminated layer section(s) in the pressure-sensitive adhesive sheet according to the present invention is formed from a coated layer(s) coated using a die coater(s). In general, a coating composition to be applied using a die coater is sent from a tank reserving the coating composition via a pipe to a die, and is discharged in a predetermined amount from the lip tip of the die onto the surface of the carrier. Thus, the die coater is an enclosed coating device, whereby the coating composition hardly comes in contact with the external air from the storage tank to the lip tip. The process for producing a pressure-sensitive adhesive sheet according to the present invention, therefore, less causes contamination of bubbles and foreign substances into the coating composition (active-energy-ray-curable composition) and less causes deterioration and drying of the coating composition and can thereby give a pressure-sensitive adhesive sheet which is less suffers from point defects and linear defects caused by these problems. If the application of the coating composition to the surface of the carrier is performed by a coating procedure having a portion where the coating composition is always in contact with the external air, such as coating with a roll knife coater, contamination of bubbles and foreign substances into the coating composition at the point of contact with the external air may occur and/or deterioration and drying of the coating composition may occur, and these problems may often cause point defects and linear defects in the pressure-sensitive adhesive sheet.

The die coater may be a die coater that is capable of forming a coated layer composed of two or more layers laminated through simultaneous multilayer coating, which is exemplified by a die coater having a multilayer slot die.

### [Active Energy Ray Irradiator]

Exemplary active energy rays for use in the present invention for curing the active-energy-ray-curable compositions include ionizing radiation such as alpha rays, beta rays, gamma rays, neutron beams, and electron beams; and ultraviolet rays. Among them, ultraviolet rays are preferred for good handleability. A device for the application of the active energy ray (active-energy-ray irradiator) is not limited and can be any of known or customary active-energy-ray irradiators, which are exemplified by lamps for ultraviolet ray generation (UV lamps) and EB (electron beam) irradiators. Preferred examples of the UV lamps include high-pressure discharge lamps such as metal halide lamps and high-pressure mercury lamps; and low-pressure discharge lamps such as chemical lamps, black-light lamps, and fluorescent lamps for insect collection.

Embodiments of the process for producing a pressure-sensitive adhesive sheet according to the present invention will be described below, with reference to the attached drawings according to necessity. Hereinafter a process of forming coated layers both on the surface of the first carrier and on the surface of the second carrier is also referred to as a "first embodiment"; and a process of forming a coated layer only on the surface of the first carrier is also referred to as a "second embodiment."

### [Process for Producing Pressure-Sensitive Adhesive Sheet According to Present Invention (First Embodiment)]

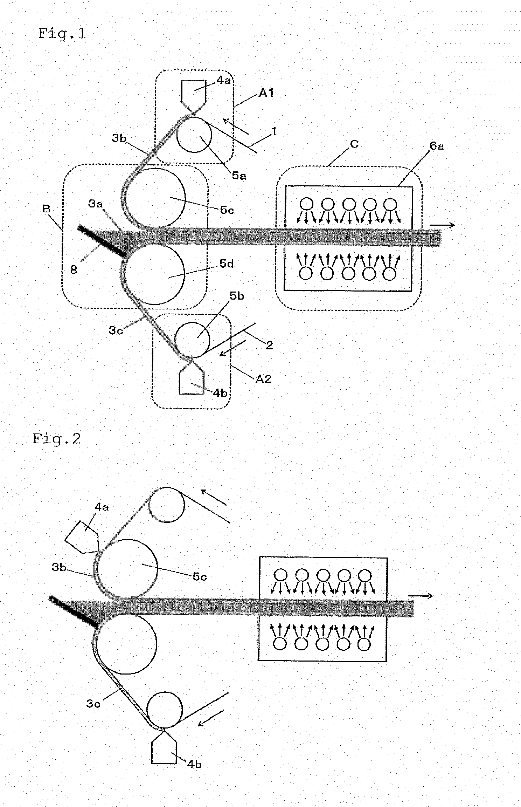

Fig. 1 is a schematic view illustrating an example of the first embodiment of the process for producing a pressure-sensitive adhesive sheet according to the present invention. The process according to the first embodiment includes at least Step A1 (or Step A1'), Step A2 (or Step A2'), Step B, and Step C as mentioned later. In Fig. 1, the reference sign 1 stands for a first carrier; 2 stands for a second carrier; 3a, 3b, and 3c stand for active-energy-ray-curable compositions, in which 3a stands for an active-energy-ray-curable composition for the formation of a base layer section, and 3b and 3c stand for active-energy-ray-curable compositions for the formation of laminated layer sections; 4a and 4b stand for die coaters; 5a, 5b, 5c, and 5d stand for process rolls in which 5a and 5b stand for back rolls, and 5c and 5d stand for coating rolls; 6a stands for an active-energy-ray irradiator (e.g., an ultraviolet ray irradiator such as a UV lamp; and 8 stands for a sheathing board.

### (Step A1 or A1')

Initially, a first carrier 1 is let out, and an active-energy-ray-curable composition 3b is applied through a die coater 4a to one surface of the first carrier 1 to form a coated layer 3b on the surface of the first carrier 1. This step is also referred to as "Step A1."

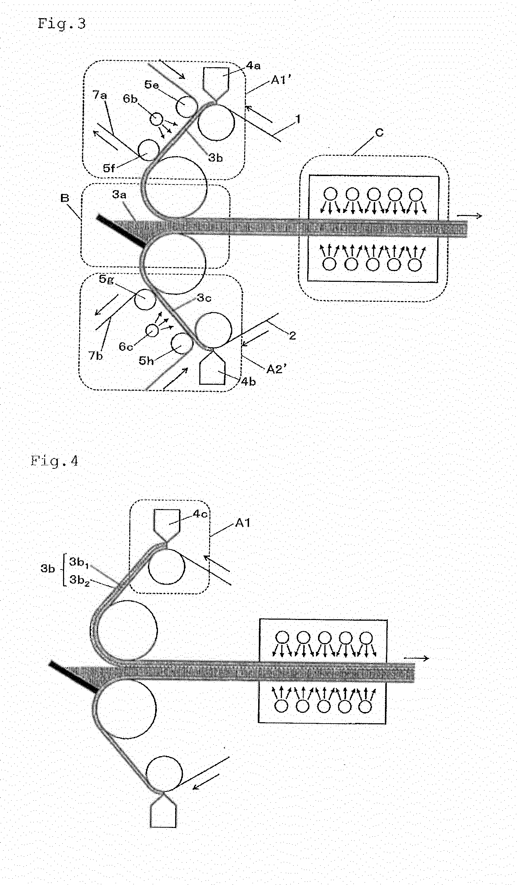

Step A1 may further include a substep of irradiating the coated layer 3b with an active energy ray after the formation of the coated layer 3b on the surface of the first carrier 1. Step A1, when further including such substep of irradiating the coated layer 3b with an active energy ray, is also specifically referred to as "Step A1'." Fig. 3 illustrates another example of the first embodiment of the process for producing a pressure-sensitive adhesive sheet according to the present invention, which includes Step A1'. In Fig. 3, the reference signs 5e, 5f, 5g, and 5h stand for process rolls; 6b and 6c stand for active-energy-ray irradiators (e.g., ultraviolet ray irradiators such as UV lamps); and 7a and 7b stand for cover films, respectively. In Step A1', after the active-energy-ray-curable composition 3b is applied through the die coater 4a to one surface of the first carrier 1 to form a coated layer 3b on the surface of the first carrier 1, the surface of the coated layer 3b opposite to the first carrier 1 is covered with a cover film 7a, and the coated layer 3b is irradiated with an active energy ray using an active-energy-ray irradiator 6b. Coverage with the cover film 7a is not always essential, but is effective for preventing contact of the coated layer 3b typically with oxygen in the atmosphere and thereby preventing reaction inhibition. The active-energy-ray irradiation in Step A1' is preferably performed at 10 to 3000 mJ/cm², though this and other irradiation conditions may vary depending on process speed, type of the active-energy-ray-curable composition, and coating thickness and are not limited.

Irradiation of the coated layer 3b with an active energy ray to cure the coated layer 3b completely or partially impedes mixing of the active-energy-ray-curable composition 3a and the active-energy-ray-curable composition 3b in after-mentioned Step B. This advantageously suppresses or reduces problems such as deterioration in functions and properties of the base layer section and/or laminated layer section, which problems might occur due to the mixing of the active-energy-ray-curable compositions 3a and 3b with each other. In contrast, when the active-energy-ray irradiation is not performed, the active-energy-ray-curable compositions 3a and 3b are partially mixed with each other at the interface between them in after-mentioned Step B. This advantageously improves the adhesion (interlayer strength) between the base layer section formed from the active-energy-ray-curable composition 3a and the laminated layer section formed from the active-energy-ray-curable composition 3b.

### (Step A2 or A2')

As with Step A1, a second carrier 2 is let out, and an active-energy-ray-curable composition 3c is applied through a die coater 4b to one surface of the second carrier 2 to form a coated layer 3c on the surface of the second carrier 2. This step is also referred to as "Step A2."

Also Step A2 may further include the substep of irradiating the coated layer 3c with an active energy ray after the formation of the coated layer 3c on the surface of the second carrier 2. Step A2, when further including such substep of irradiating the coated layer 3c with an active energy ray, is also specifically referred to as "Step A2'." In Step A2', after the active-energy-ray-curable composition 3c is applied through the die coater 4b to one surface of the second carrier 2 to form the coated layer 3c on the surface of the second carrier 2, the surface of the coated layer 3c opposite to the second carrier 2 is covered with a cover film 7b, and the coated layer 3c is irradiated with an active energy ray using an active-energy-ray irradiator 6c. The effects of irradiation with an active energy ray are the same as in Step A1'.

In Step A1 (or Step A1') and Step A2 (or Step A2'), the first carrier 1 and the second carrier 2 have been often stored as being wound as rolls before use, and they are unwound (unreeled) from the rolls upon use.

In Step A1 (or Step A1') and Step A2 (or Step A2'), the positions where the active-energy-ray-curable compositions 3b and 3c are applied to surfaces of the first carrier 1 and the second carrier 2, respectively, are not limited. In Fig. 1, the active-energy-ray-curable resin compositions 3b and 3c are applied to the carriers at positions over the process rolls 5a and 5b, respectively. However, the application positions are not limited thereto, and the application may be performed, for example, at a position over a process roll 5c as illustrated in Fig. 2, or may be performed at a position other than one over the process roll.

In Step A1 (or Step A1') and Step A2 (or Step A2'), the examples (embodiments) illustrated in Figs. 1, 2, and 3 each employ the die coaters 4a and 4b each of which applies the active-energy-ray-curable composition 3b or 3c to form a single layer (monolayer). However, die coaters for use herein are not limited thereto. Specifically, the process may employ a die coater 4c as illustrated in Step A1 in Fig. 4, which die coater 4c can apply active-energy-ray-curable composition 3b₁ and 3b₂ simultaneously in a multilayer coating manner while an interface between the formed layers is formed, to thereby form a multilayer coated layer 3b including two laminated layers; or may employ a die coater which can form a multilayer coated layer including three or more laminated layers through simultaneous multilayer coating.

The coating thicknesses (coated layer thicknesses) of the active-energy-ray-curable compositions 3b and 3c in Step A1 (or Step A1') and Step A2 (or Step A2') are each preferably from 1 to 1000 µm, and more preferably from 10 to 500 µm, though they may vary depending typically on the thicknesses of the laminated layer sections in the target pressure-sensitive adhesive sheet and are not limited. When a multilayer coated layer 3b including two or more laminated layers is formed through simultaneous multilayer coating typically as in Step A1 of Fig. 4, the total thickness of the respective layers (layers 3b₁ and 3b₂ in the embodiment illustrated in Fig. 4) may fall within the above-specified range.

Step A1 (or Step A1') and Step A2 (or Step A2') perform the application of active-energy-ray-curable compositions onto carriers using die coaters and thereby less cause problems such as contamination of bubbles and foreign substances into the active-energy-ray-curable compositions (coating compositions) and deterioration and drying of the active-energy-ray-curable resin compositions. Accordingly, the process for producing a pressure-sensitive adhesive sheet according to the present invention can give a pressure-sensitive adhesive sheet which less suffers from point defects and linear defects due typically to the problems such as bubbles.

### (Step B)

Subsequent to Step A1 (or Step A1') and Step A2 (or Step A2'), the first carrier 1 and the second carrier 2 are placed so that coating-layer-side surfaces of the carriers face each other (specifically, the surfaces of the coated layer 3b and the coated layer 3c opposite to the carriers face each other), and an active-energy-ray-curable composition 3a is introduced into between the first and second carriers 1 and 2 (see Fig. 1 and Fig. 3). This step is also referred to as "Step B."

Specifically, a "reservoir" is provided by a sheathing board 8 and a process roll 5d, and the active-energy-ray-curable composition 3a is introduced from the reservoir into between the process roll 5c and the process roll 5d to thereby introduce the active-energy-ray-curable composition 3a into between the first and second carriers 1 and 2 (namely, into between the coated layers 3b and 3c).

The thickness of the layer of active-energy-ray-curable composition 3a is preferably from 1 to 6000 µm, and more preferably from 10 to 3000 µm, though the thickness may vary depending typically on the thickness of the base layer section of the target pressure-sensitive adhesive sheet and is not limited.

Step B gives a multilayer assemblage having a multilayer structure of [(first carrier 1)/(active-energy-ray-curable compositions 3b)/(active-energy-ray-curable composition 3a)/(active-energy-ray-curable composition 3c)/(second carrier 2)]. In other words, the multilayer assemblage is a multilayer assemblage having the active-energy-ray-curable compositions between the first and second carriers 1 and 2.

The coating system for the active-energy-ray-curable composition in Step B resists being affected by properties of the coating liquid (properties of the coating composition) and can perform coating even with a coating composition having a too high viscosity to be applied with a die coater. For this reason, the process for producing a pressure-sensitive adhesive sheet according to the present invention is applicable to the production of pressure-sensitive adhesive sheets of various kinds.

### (Step C)

Subsequent to Step B, the multilayer assemblage obtained in Step B is irradiated with an active energy ray using an active-energy-ray irradiator 6a (see Fig. 1 and Fig. 3). This step is also referred to as "Step C." The active-energy-ray irradiation in Step C is preferably performed at 10 to 3000 mJ/cm², though this and other irradiation conditions may vary depending on the process speed, the type and coating thickness of the active-energy-ray-curable composition and are not limited.

Step C gives a pressure-sensitive adhesive sheet by curing the active-energy-ray-curable compositions (3a, 3b, and 3c) in the multilayer assemblage. The multilayer assemblage has the structure of [(first carrier 1)/(active-energy-ray-curable composition 3b)/(active-energy-ray-curable composition 3a)/(active-energy-ray-curable composition 3c)/(second carrier 2)]. The resulting pressure-sensitive adhesive sheet has a multilayer structure of [(first carrier 1)/(laminated layer section formed from the composition 3b)/(base layer section formed from the composition 3a)/(laminated layer section formed from the composition 3c)/(second carrier 2)].

In the first embodiment of the process for producing a pressure-sensitive adhesive sheet according to the present invention, Step B is provided after Step A1 (or Step A1') and Step A2 (or Step A2'), and Step C is provided after Step B. The temporal order (time sequence) between Step A1 (or Step A1') and Step A2 (or Step A2') is not limited. Where necessary, the process may further include one or more other steps between [Step A1 (or Step A1') and Step A2 (or Step A2')] and [Step B]. The process may also further include one or more steps according to necessity after Step C. Examples of such additional steps include thermal drying step, step of removing the carrier(s), step of slitting the pressure-sensitive adhesive sheet to a suitable product width, and step of winding the pressure-sensitive adhesive sheet as a roll.

Process speeds (e.g., process speed in Step C) in the process for producing a pressure-sensitive adhesive sheet according to the present invention are each preferably from 0.1 to 100 m/minute, and more preferably from 1 to 80 m/minute, though they may vary depending typically on the thickness of the pressure-sensitive adhesive sheet, the formulations of compositions (formulations of coating compositions), characteristic properties and thickness of the product, and conditions for active-energy-ray irradiation.

A production process (simultaneous coating process) for a multilayered pressure-sensitive adhesive sheet through simultaneous coating of coating compositions (e.g., the production process disclosed in Japanese Patent No. 2505255) generally employs simultaneous multilayer coating of a multilayer coated layer including layers (layers formed from active-energy-ray-curable compositions) in the same number as the number of polymer layers which the pressure-sensitive adhesive sheet will have. Such simultaneous multilayer coating is performed typically with a die coater using a multilayer die (multilayer slot die) having a number of manifolds. In general, coating with a die coater should employ a die whose inner design has been made to meet the properties of a coating composition (e.g., active-energy-ray-curable composition) to be used. This means that another die should be newly designed and manufactured when another coating composition is employed. In particular, the simultaneous multilayer coating process requires a multilayer slot die which has been designed and manufactured so as to meet not only the types of polymer layers of the pressure-sensitive adhesive sheet but also the combination among these polymer layers. Such a multilayer slot die has a complicated inner structure, is very heavy, and is difficult to handle. It is inefficient to possess a large number of different multilayer slot dies corresponding to the types of pressure-sensitive adhesive sheets to be produced. In addition, the properties of coating compositions applicable to coating with a die coater are limited, and the simultaneous multilayer coating process, when employed, does not meet the production of pressure-sensitive adhesive sheets (multilayered pressure-sensitive adhesive sheets) of various kinds.

In contrast to the simultaneous multilayer coating process, the process for producing a pressure-sensitive adhesive sheet according to the present invention has the following advantages. The process for producing a pressure-sensitive adhesive sheet according to the present invention (the first embodiment) is a sequential coating process as described above, in which the active-energy-ray-curable compositions (3b and 3c) for the formation of laminated layer sections are applied to the surfaces of carriers respectively in Step A1 (or Step A1') and Step A2 (or Step A2'); and, subsequently, the active-energy-ray-curable composition (3a) for the formation of the base layer section is introduced into between the two carriers in Step B. Specifically, active-energy-ray-curable compositions for the formation of polymer layers of a pressure-sensitive adhesive sheet are applied separately to form the respective layers in the above manner. This eliminates the need of the complicated die designing and enables the production of pressure-sensitive adhesive sheets of various kinds (of various combinations of polymer layers) using facilities in a small number. The process for producing a pressure-sensitive adhesive sheet according to the present invention may employ a multilayer slot die and, even in this case, can employ one having a simpler structure. In addition, the process for producing a pressure-sensitive adhesive sheet according to the present invention includes the coating system (Step B) which resists being affected by the properties of the coating composition, and this enables the production of pressure-sensitive adhesive sheets using coating compositions of further various kinds. The process for producing a pressure-sensitive adhesive sheet according to the present invention therefore excels in production cost and is applicable to the production of pressure-sensitive adhesive sheets (multilayered pressure-sensitive adhesive sheets) of various kinds.

### [Process for Producing Pressure-Sensitive Adhesive Sheet According to Present Invention (Second Embodiment)]

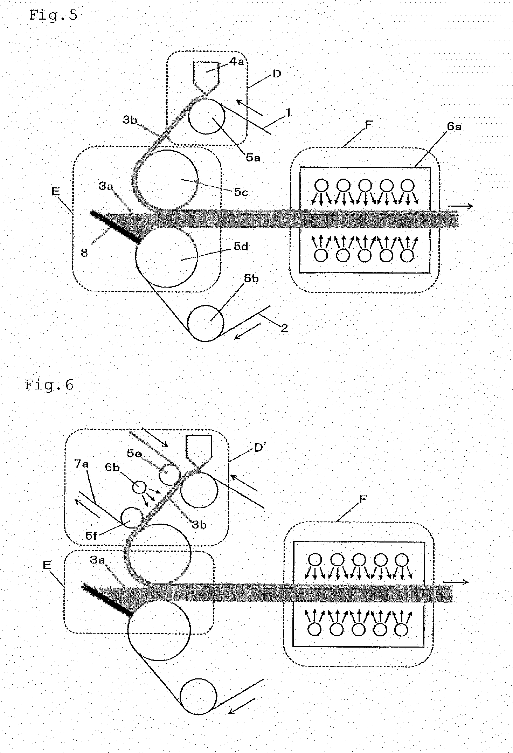

Fig. 5 and Fig. 6 are schematic views illustrating examples (specific embodiments) of the second embodiment of the process for producing a pressure-sensitive adhesive sheet according to the present invention. The second embodiment is basically the same as with the first embodiment, except for providing a coated layer on only one of two carriers. In the second embodiment, steps corresponding to Step A1, Step A1', Step B, and Step C in the first embodiment are also referred to as Step D, Step D', Step E, and Step F, respectively. Specifically, the second embodiment includes at least after-mentioned Step D (or Step D'), Step E, and Step F.

### (Step D or D')

Initially, a first carrier 1 is let out, and an active-energy-ray-curable composition 3b is applied through a die coater 4a to one surface of the first carrier 1 to form a coated layer 3b on the surface of the first carrier 1 (see Fig. 5). This step is also referred to as "Step D." Step D may further include a substep of irradiating the coated layer 3b with an active energy ray after the formation of the coated layer 3b on the surface of the first carrier 1 (see Fig. 6). Step D, when further including such substep of irradiating the coated layer 3b with an active energy ray, is specifically also referred to as "Step D'."

As with the first embodiment of the process for producing a pressure-sensitive adhesive sheet according to the present invention, the position where the active-energy-ray-curable composition 3b is applied to the surface of the first carrier 1 is not limited, and the coating may be performed at a position over a process roll 5a, at a position over a process roll 5c, or at a position other than those over the process rolls.

In Step D (or Step D'), the embodiments illustrated in Fig. 5 and Fig. 6 each employ such a die coater (4a) as to apply the active-energy-ray-curable composition 3b to form a single layer (monolayer). The die coater for use herein, however, is not limited thereto. Specifically, the process may employ a die coater as illustrated in Step A1 of Fig. 4 in the first embodiment, which die coater can form a multilayer coated layer including two or more laminated layers through simultaneous multilayer coating.

The coating thickness (coated layer thickness) of the active-energy-ray-curable composition 3b in Step D (or Step D') is preferably from 1 to 1000 µm, and more preferably from 10 to 500 µm, though the thickness may vary depending typically on the thickness of the laminated layer section in the target pressure-sensitive adhesive sheet and is not limited. When a multilayer coated layer 3b including two or more laminated layers is formed through simultaneous multilayer coating typically as mentioned above, the total thickness of the respective layers may fall within the above-specified range.

Step D (or Step D') performs the application of the active-energy-ray-curable composition onto the carrier using a die coater and thereby less causes problems such as contamination of bubbles and foreign substances into the active-energy-ray-curable composition (coating composition) and deterioration and drying of the coating composition. Accordingly, the process for producing a pressure-sensitive adhesive sheet according to the present invention can give a pressure-sensitive adhesive sheet which less suffers from point defects and linear defects due to the problems such as bubbles.

As with Step D, a second carrier 2 is let out. However, in the second embodiment of the process for producing a pressure-sensitive adhesive sheet according to the present invention, a coated layer is not formed on the surface of the second carrier 2.

The first carrier 1 and the second carrier 2 have been often stored as being wound as rolls before use, and they are unwound (unreeled) from the rolls upon use.

### (Step E)

Subsequent to Step D (or Step D'), the first carrier 1 and the second carrier 2 are placed so that the surface of the coated layer 3b side of the first carrier 1 (namely, the surface of the coated layer 3b opposite to the carrier) faces one surface of the second carrier, and an active-energy-ray-curable composition 3a is introduced into between the first and second carriers 1 and 2. This step is also referred to as "Step E."

Specifically, a "reservoir" is provided by a sheathing board 8 and a process roll 5d, and the active-energy-ray-curable composition 3a is introduced from the reservoir into between the process roll 5c and the process roll 5d. Thus, the active-energy-ray-curable composition 3a is introduced into between the first carrier 1 (or the coated layer 3b) and the second carrier 2.

The thickness of the layer of active-energy-ray-curable composition 3a is preferably from 1 to 6000 µm, and more preferably 10 to 3000 µm, though the thickness may vary depending typically on the thickness of the base layer section of the target pressure-sensitive adhesive sheet and is not limited.

Step E gives a multilayer assemblage having a multilayer structure of [(first carrier 1)/(active-energy-ray-curable composition 3b)/(active-energy-ray-curable composition 3a)/(secand carrier 2)]. In other words, the multilayer assemblage is a multilayer assemblage having the active-energy-ray-curable compositions between the first and second carriers 1 and 2.

The coating system for the active-energy-ray-curable composition in Step E resists being affected by properties of the coating liquid and can perform coating even with a coating composition having such a too high viscosity to be applied with a die coater. For this reason, the process for producing a pressure-sensitive adhesive sheet according to the present invention is applicable to the production of pressure-sensitive adhesive sheets of various kinds.

### (Step F)

Subsequent to Step E, the multilayer assemblage obtained in Step E is irradiated with an active energy ray using an active-energy-ray irradiator 6a. This step is also referred to as "Step F." The active-energy-ray irradiation in Step F is preferably performed at 10 to 3000 mJ/cm² though this and other irradiation conditions may vary depending on the process speed, the type and coating thickness of the active-energy-ray-curable composition and are not limited.

Step F gives a pressure-sensitive adhesive sheet by curing the active-energy-ray-curable compositions (3a and 3b) in the multilayer assemblage. The multilayer assemblage has the structure of [(first carrier 1)/(active-energy-ray-curable composition 3b)/(active-energy-ray-curable composition 3a)/(second carrier 2)]. The resulting pressure-sensitive adhesive sheet has a multilayer structure of [(first carrier 1)/(laminated layer section formed from the active-energy-ray-curable resin composition 3b)/(base layer section formed from the active-energy-ray-curable resin composition 3a)/(second carrier 2)].

In the second embodiment of the process for producing a pressure-sensitive adhesive sheet according to the present invention, Step E is provided after Step D (or Step D'), and Step F is provided after Step E. Where necessary, the process may further include one or more steps between Step D (or Step D') and Step E. The process may also further include one or more steps according to necessity after Step F. Examples of such additional steps include thermal drying step, step of removing the carrier(s), step of slitting the pressure-sensitive adhesive sheet to a suitable product width, and step of winding the pressure-sensitive adhesive sheet as a roll.

Process speeds herein are as described above. In the embodiments illustrated in Fig. 5 and Fig. 6, the first carrier 1 is illustrated as being positioned upside the second carrier 2, but the positional relation between the two carriers is not limited, and the first carrier 1 may be positioned downside the second carrier 2.

The process for producing a pressure-sensitive adhesive sheet according to the present invention (the second embodiment) is a sequential coating process as described above, in which the active-energy-ray-curable composition (3b) for the formation of a laminated layer section is applied to the surface of the carrier in Step D (or Step D'); and subsequently the active-energy-ray-curable composition (3a) for the formation of a base layer section is introduced into between two carriers in Step E. Specifically, active-energy-ray-curable compositions for the formation of polymer layers of a pressure-sensitive adhesive sheet are applied separately to form the respective layers in the above manner. This eliminates the need of the complicated die designing and enables the production of pressure-sensitive adhesive sheets of various kinds (in various combinations of polymer layers) using facilities in a small number. The process for producing a pressure-sensitive adhesive sheet according to the present invention may employ a multilayer slot die and, even in this case, can employ one having a simpler structure. In addition, the process for producing a pressure-sensitive adhesive sheet according to the present invention includes the coating system (Step E) which resists being affected by the properties of the coating composition, and this enables the production of pressure-sensitive adhesive sheets using coating compositions of further various kinds. The process for producing a pressure-sensitive adhesive sheet according to the present invention therefore excels in production cost and is applicable to the production of pressure-sensitive adhesive sheets (multilayered pressure-sensitive adhesive sheets) of various kinds.

### [Pressure-Sensitive Adhesive Sheet]

The process for producing a pressure-sensitive adhesive sheet according to the present invention produces pressure-sensitive adhesive sheets (pressure-sensitive adhesive sheets according to the present invention). The pressure-sensitive adhesive sheets each have a multilayer structure including at least two polymer layers. The at least two polymer layers include a base layer section composed of one polymer layer; and one or more laminated layer sections each composed of at least one polymer layer. Specifically, a pressure-sensitive adhesive sheet obtained by the production process according to the first embodiment has a multilayer structure including three or more layers and having a base layer section and, on both sides thereof, laminated layer sections each independently formed from at least one polymer layer. A pressure-sensitive adhesive sheet obtained by the production process according to the second embodiment has a multilayer structure including two or more layers and having a base layer section and, on one side thereof, a laminated layer section formed from at least one polymer layer.

The pressure-sensitive adhesive sheets according to the present invention should each have an adhesive face as at least one surface thereof. Specifically, at least one of polymer layers constituting two surface layers should be a pressure-sensitive adhesive layer. The pressure-sensitive adhesive sheets are preferably double-sided pressure-sensitive adhesive sheets in which polymer layers constituting the two surface layers are both pressure-sensitive adhesive layers. More specifically, in the case of a pressure-sensitive adhesive sheet obtained by the production process according to the first embodiment, at least one of the laminated layer sections should be a pressure-sensitive adhesive layer; namely, at least one of the active-energy-ray-curable compositions 3b and 3c should be a pressure-sensitive adhesive composition. Above all, it is preferred that both the two laminated layer sections are pressure-sensitive adhesive layers; namely, both the active-energy-ray-curable resin compositions 3b and 3c are pressure-sensitive adhesive compositions. In the case of a pressure-sensitive adhesive sheet obtained by production process according to the second embodiment, at least one of the laminated layer section and the base layer section should be a pressure-sensitive adhesive layer; namely, at least one of the active-energy-ray-curable compositions 3b and 3c should be a pressure-sensitive adhesive composition. Above all, it is preferred that the laminated layer section is a pressure-sensitive adhesive layer. When the laminated layer section is formed from two or more polymer layers (e.g., the laminated layer section formed from the active-energy-ray-curable compositions 3b as illustrated in Fig. 4), the phrase "laminated layer section is a pressure-sensitive adhesive layer" refers to that, of polymer layers constituting the laminated layer section, at least an outermost layer (polymer layer in contact with the carrier) is a pressure-sensitive adhesive layer; namely, at least active-energy-ray-curable resin composition 3b₂ in the embodiment illustrated in Fig. 4 is a pressure-sensitive adhesive composition.

The pressure-sensitive adhesive sheets according to the present invention each preferably have the aforementioned bubble-containing polymer layer (or bubble-containing pressure-sensitive adhesive layer) typically for improvements in conformability and affixing ability to asperities. Above all, they more preferably have the bubble-containing polymer layer (or bubble-containing pressure-sensitive adhesive layer) as the base layer section.

The pressure-sensitive adhesive sheets according to the present invention particularly preferably have structures as mentioned below. Specifically, A pressure-sensitive adhesive sheet obtained by the production process according to the first embodiment preferably has a structure of [(pressure-sensitive adhesive layer)/(bubble-containing polymer layer)/(pressure-sensitive adhesive layer)]; namely a structure in which the active-energy-ray-curable compositions 3b and 3c are pressure-sensitive adhesive composition, and the active-energy-ray-curable resin composition 3a is a bubble-containing composition. The pressure-sensitive adhesive sheet more preferably has a structure of [(acrylic pressure-sensitive adhesive layer)/(bubble-containing acrylic polymer layer)/(acrylic pressure-sensitive adhesive layer)]. A pressure-sensitive adhesive sheet obtained by the production process according to the second embodiment preferably has a structure of [(pressure-sensitive adhesive layer)/(bubble-containing polymer layer)] and more preferably has a structure of [(acrylic pressure-sensitive adhesive layer)/(bubble-containing acrylic polymer layer)].

Though not critical, the thickness of each of the pressure-sensitive adhesive sheets according to the present invention is preferably from 2 to 8000 µm, and more preferably from 20 to 4000 µm. The thickness of the base layer section in the pressure-sensitive adhesive sheets according to the present invention is not critical, but is preferably from 1 to 6000 µm, and more preferably from 10 to 3000 µm. The thickness of each of the laminated layer section(s) in the pressure-sensitive adhesive sheets according to the present invention is not critical, but is preferably from 1 to 1000 µm, and more preferably from 10 to 500 µm. In general, the thickness of the base layer section is equal to the thickness (composition layer thickness) of the layer of active-energy-ray-curable composition 3a constituting the base layer section; whereas the thickness of a laminated layer section is equal to the layer thickness (coated layer thickness) of the coated layer 3b or the coated layer 3c constituting the laminated layer section. When a laminated layer section is formed from two or more polymer layers, the total thickness of these polymer layers may fall within the above-specified range.

### Industrial Applicability

The process for producing a pressure-sensitive adhesive sheet according to the present invention can give pressure-sensitive adhesive sheets %which less suffer from point defects and linear defects. The process for producing a pressure-sensitive adhesive sheet according to the present invention can employ dies each having a lighter weight and a simpler structure, thereby excels in production cost, and is applicable even to the production of pressure-sensitive adhesive sheets of various kinds because of including such a coating system that resists being affected by properties of a coating composition, as the coating system for the coating composition to form the base layer section. Reference Signs List

- A1: Step A1
- A2: Step A2
- A1': Step A1'
- A2': Step A2'
- B: Step B
- C: Step C
- D: Step D
- D': Step D'
- E: Step E
- F: Step F
- 1: first carrier
- 2: second carrier
- 3a: active-energy-ray-curable composition (active-energy-ray-curable composition for the formation of base layer section)
- 3b, 3b₁, 3b₂, 3c: active-energy-ray-curable composition (active-energy-ray-curable composition for the formation of laminated layer section) (or coated layer)
- 4a,: 4b die coater
- 4c: die coater (die coater capable of forming a multilayer coated layer including two laminated layers through simultaneous multilayer coating)
- 5a, 5b, 5c, 5d, 5e, 5f, 5g, 5h: process roll
- 6a, 6b, 6c: active-energy-ray irradiator
- 7a, 7b: cover film
- 8: sheathing board

## Claims

1. A process for producing a pressure-sensitive adhesive sheet, the process comprising at least:
Step A1 of applying an active-energy-ray-curable composition to one surface of a first carrier using a die coater to form a coated layer thereon;
Step A2 of applying an active-energy-ray-curable composition to one surface of a second carrier using a die coater to form a coated layer thereon;
subsequent to Steps A1 and A2, Step B of placing the first carrier and the second carrier so as to allow surfaces of the respective coated layers to face each other, and introducing an active-energy-ray-curable composition into between the first and second carriers; and
subsequent to Step B, Step C of irradiating a multilayer assemblage with an active energy ray, the multilayer assemblage being obtained in Step B and including the first carrier, the second carrier, and the active-energy-ray-curable compositions present between the first and second carriers.

2. A process for producing a pressure-sensitive adhesive sheet, the process at least comprising:
Step A1' of applying an active-energy-ray-curable composition to one surface of a first carrier using a die coater to form a coated layer thereon, and irradiating the coated layer with an active energy ray to cure the coated layer completely or partially;
Step A2' of applying an active-energy-ray-curable composition to one surface of a second carrier using a die coater to form a coated layer thereon, and irradiating the coated layer with an active energy ray to cure the coated layer completely or partially;
subsequent to Steps A1' and A2', Step B of placing the first carrier and the second carrier so as to allow surfaces of the respective coated layers to face each other, and introducing an active-energy-ray--curable composition into between the first and second carriers; and
subsequent to Step B, Step C of irradiating a multilayer assemblage with an active energy ray, the multilayer assemblage being obtained in Step B and including the first carrier, the second carrier, and the active-energy-ray-curable composition present between the first and second carriers.

3. A process for producing a pressure-sensitive adhesive sheet, the process comprising at least:
Step D of applying an active-energy-ray-curable composition to one surface of a first carrier using a die coater to form a coated layer thereon;
subsequent to Step D, Step E of placing the first carrier and a second carrier so as to allow the surface of the coated layer of the first carrier and one surface of the second carrier to face each other, and introducing an active-energy-ray-curable composition into between the first and second carriers; and
subsequent to Step E, Step F of irradiating a multilayer assemblage with an active energy ray, the multilayer assemblage being obtained in Step E and including the first carrier, the second carrier and the active-energy-ray-curable compositions present between the first and second carriers.

4. A process for producing a pressure-sensitive adhesive sheet, the process comprising at least:
Step D' of applying an active-energy-ray-curable composition to one surface of a first carrier using a die coater to form a coated layer thereon, and irradiating the coated layer with an active energy ray to cure the coated layer completely or partially;
subsequent to Step D', Step E of placing the first carrier and a second carrier so as to allow the surface of the coated layer of the first carrier and one surface of the second carrier to face each other, and introducing an active-energy-ray-curable composition into between the first and second carriers; and
subsequent to Step E, Step F of irradiating a multilayer assemblage with an active energy ray, the multilayer assemblage being obtained in Step E and including the first carrier, the second carrier, and the active-energy-ray-curable composition present between the first and second carriers.
